# FASCICULE DE BREVET EUROPEEN

(11) **EP 2 455 429 B1**
(45) Date de publication et mention de la délivrance du brevet: **14.08.2013**
(21) Numéro de dépôt: 10014783.4
(22) Date de dépôt: 19.11.2010
(51) Int. Cl.: C09C 1/02

(54) **Procédé de préparation de suspensions aqueuses de matiéres minérales au moyen d'amines en combinaison avec des polymères vinyl-carboxyliques.**
Verfahren zur Herstellung von Wassersuspensionen aus mineralischen Stoffen mit Hilfe von Aminen in Kombination mit Vinyl-Carbon-Polymeren
Method for preparing aqueous suspensions of mineral materials using amines combined with vinyl carboxylic polymers

(43) Date de publication de la demande: 23.05.2012
(73) Titulaire: Omya Development AG, 4665 Oftringen (CH)
(72) Inventeur: Gane, Patrick, 4852 Rothrist (CH); Buru, Matthias, 4852 Rothrist (CH); Rentsch, Samuel, 4663 Aarburg (CH)
(74) Mandataire: Richebourg, Michel François

(56) Documents cités:
- WO-A2-02/49765
- FR-A1- 2 896 171
- US-A- 4 370 171

## Description

La présente invention est relative aux agents mis en oeuvre pour disperser ou pour aider au broyage de matières minérales en milieu humide.

Elle permet à l'homme du métier de minimiser la quantité de polymères vinyl-carboxyliques, communément mis en oeuvre dans ces opérations, sans pour autant altérer la stabilité et l'extrait sec des suspensions aqueuses de matières minérales ainsi fabriquées. Cette invention repose sur la mise en oeuvre d'amines, en combinaison avec lesdits polymères vinyl-carboxyliques. De manière surprenante et avantageuse, on parvient alors à réduire la quantité de polymères vinyl-carboxyliques mis en oeuvre, tout en maintenant les propriétés précitées à un niveau au moins équivalent à celui obtenu sans ajout d'amines dans les conditions spécifiées par la présente invention.

L'industrie minéralière est une grande consommatrice de produits chimiques. Ceux-ci sont utilisés dans les différentes étapes de transformation/modification/traitement que subissent les matières minérales. Ainsi, dans le cas du carbonate de calcium d'origine naturelle ou synthétique, l'homme du métier réalise de nombreuses opérations dites de "broyage" (réduction de la taille granulométrique des particules) à sec ou plus fréquemment en milieu humide, ou de "dispersion" (mise en suspension des particules dans un liquide).

Ces deux opérations sont rendues plus aisées par la mise en oeuvre respectivement d'agents d'aide au broyage et d'agents dispersants. Le rôle des agents de broyage est de minimiser la limite d'écoulement de la suspension lors de l'opération de broyage et ce, de manière à augmenter la productivité du broyeur ; on facilite ainsi l'action mécanique d'attrition et de fragmentation des particules. Quant aux agents dispersants, ils permettent de maintenir la viscosité d'une suspension dans des plages acceptables au fur et à mesure qu'on y introduit les matières minérales ; ceci permet d'augmenter l'extrait sec tout en gardant un niveau de viscosité suffisamment bas pour manipuler la suspension et la stocker sans risque de sédimentation.

L'art antérieur est particulièrement riche au sujet de tels additifs. Depuis de nombreuses années, on sait que les homopolymères de l'acide acrylique constituent des agents efficaces pour aider à la dispersion ou au broyage en milieu humide du carbonate de calcium. En guise de référence, on pourra se reporter aux documents FR 2 539 137 A1, FR 2 683 536 A1, FR 2 683 537 A1, FR 2 683 538 A1, FR 2 683 539 A1 et FR 2 802 830 A1, FR 2 818 165 A1 qui illustrent de nombreuses variantes de ces homopolymères, en fonction de leur poids moléculaire et de leur neutralisation.

Pour le même type d'application, il est également intéressant de copolymériser l'acide acrylique avec un autre monomère carboxylique, tel que par exemple l'acide méthacrylique ou l'acide maléique (voir à ce sujet les documents EP 0850 685 A1 et FR 2 903 618 A1) et/ou avec un autre monomère à insaturation éthylénique mais sans fonction carboxylique, comme un ester (méth)acrylique : cette dernière variante est décrite dans les documents cités au paragraphe précédent.

Ceci étant, du point de vue de la législation et des exigences environnementales, diminuer la quantité de polymère mis en oeuvre reste une priorité pour l'homme du métier, pour autant qu'elle s'accommode d'un niveau de performances équivalent à celui obtenu jusqu'alors. Parmi ces performances, on met particulièrement en avant la stabilité des suspensions aqueuses fabriquées, comme déterminée par des mesures de viscosité Brookfield™ à différents instants, et l'extrait sec final exprimé en % en poids sec de matières minérales par rapport au poids total desdites suspensions.

A cet égard, le document FR 2 894 846 A1 enseigne la mise en oeuvre de composés fluorés avec des polyacrylates de l'art antérieur, permettant ainsi de diminuer leur dose dans des procédés de dispersion et de broyage de matières minérales. Néanmoins, lesdits composés fluorés demeurent des produits rares et chers, eux-mêmes susceptibles d'avoir un impact négatif sur l'environnement.

On sait également que réduire l'indice de polymolécularité des polymères acryliques confère à ces derniers des propriétés de dispersion et d'aide au broyage améliorées. Pour ce faire, une méthode consiste à isoler, pour un polymère donné, les chaînes d'un certain poids moléculaire par des techniques de séparation, statiques ou dynamiques, en présence de solvants, tel que décrit dans le document EP 0 499 267 A1. Un autre moyen repose sur la mise en oeuvre de la polymérisation radicalaire dite « contrôlée » (PRC). Ce terme fait référence à des techniques de synthèse basées sur l'utilisation d'agents de transfert de chaîne particuliers, comme des xanthates ou des trithiocarbonates (voir les documents EP 1 529 065 A1 et EP 1 377 615A1).

En réduisant l'indice de polymolécularité des polymères acryliques fabriqués, on augmente leur capacité à disperser ou à faciliter le broyage d'une matière minérale dans l'eau. Ceci est notamment décrit dans les documents « Dispersion of calcite by poly(sodium acrylate) prepared by Reversible Addition-Fragmentation chain Transfer (RAFT) polymerization » (Polymer (2005), 46(19), pp. 8565-8572) et « Synthesis and Characterization of Poly(acrylic acid) Produced by RAFT Polymerization. Application as a Very Efficient Dispersant of CaCO3, Kaolin, and TiO2 » (Macromolecules (2003), 36(9), pp. 3066-3077).

Toutefois, ces dernières solutions basées sur des techniques de séparation ou de PRC, sont parfois difficiles à mettre en oeuvre: elles nécessitent des installations spécifiques dont ne dispose pas forcément toute unité industrielle. Enfin, la Demande de Brevet Française FR 2 940 141 porte sur la neutralisation de polyacrylates par l'hydroxyde de lithium, permettant de diminuer la quantité de polymère pour disperser et/ou faciliter le broyage dans l'eau du carbonate de calcium. Néanmoins, l'hydroxyde de lithium qui fait également l'objet de la demande de brevet WO 2010/063757 demeure un composé extrêmement onéreux, qui n'est pas sans poser de graves problèmes environnementaux (voir les dispositions portant sur le recyclage de ce composé).

Proposer une solution simple permettant d'améliorer les performances des polyacrylates de l'art antérieur comme agents dispersants et d'aide au broyage de matières minérales en milieu aqueux, c'est-à-dire permettant d'en diminuer la quantité pour un niveau de performances équivalent, constitue à ce jour un problème non résolu de manière satisfaisante.

Poursuivant ses recherches dans ce domaine, la Demanderesse est parvenue à mettre au point un procédé de fabrication d'une suspension aqueuse de matière minérale par dispersion et/ou broyage en présence d'au moins une amine et d'au moins un polymère vinyl-carboxylique, comme agent permettant de réduire la quantité dudit polymère, ce dernier étant totalement neutralisé par un agent autre que l'amine.

De manière tout à fait inattendue, la combinaison entre l'amine et le polymère vinyl-carboxylique permet de disperser et/ou de faciliter le broyage en milieu aqueux d'une matière minérale, de manière plus efficace que le polymère acrylique utilisé sans l'amine. On démontre que, pour un niveau de performances au moins équivalent (en terme d'extrait sec et de viscosité Brookfield™ mesurée à 10 tours / minute et ce, pour une granulométrie donnée), on parvient selon l'invention à réduire la quantité de polymère vinyl-carboxylique mis en oeuvre.

Un exemple d'amine mise en oeuvre selon l'invention est l'AMP (2-amino-2-méthyl 1-propanol ; n° CAS = 124-68-5). En outre, selon une variante préférée de l'invention, les amines mises en oeuvre possèdent la formule particulière (I) qui sera explicitée plus loin. On démontre alors que celles-ci s'avèrent plus performantes que l'AMP, pour améliorer l'efficacité du système dispersant selon les paramètres évoqués plus haut. On indique en outre que ces amines de formule (I) sont déjà connues, notamment comme agents permettant de développer la force colorante d'une peinture (voir le document WO 2009 / 087330 A1).

Dans l'art antérieur, l'AMP a déjà été mise en oeuvre avec un polymère acrylique pour disperser une matière minérale. On pourra se reporter au document US 4 370 171 A1 qui enseigne la combinaison de certaines alcanolamines avec des polymères acryliques, en vue de disperser du carbonate de calcium. Selon l'exemple 1 de ce document, on pourra constater que la combinaison revendiquée consiste en fait à prémélanger le dispersant acrylique non neutralisé avec une alcanolamine : en ce sens, le dispersant acide est neutralisé par l'alcanolamine. Ceci n'est pas le cas de notre invention où le polymère acrylique est totalement neutralisé par un agent différent de l'amine.

De plus, rien dans le document US 4 370 171 A1 ne suggère que les alcanolamines décrites permettraient de réduire la quantité de polymère acrylique, sans affecter les performances du système dispersant. De plus, les ratio massiques alcanolamine:dispersant sont compris entre 0,5:1 et 1,5:1 dans ce document : ceci ne décrit ni ne suggère le ratio préféré de notre invention qui est compris entre 0,05:1 et 0,35-1. Enfin, selon une autre caractéristique préférée de notre invention non divulguée ni suggérée dans l'état de la technique, les composés de formule (I) conduisent à des performances particulièrement intéressantes, en terme d'extrait sec et de rhéologie des suspensions aqueuses fabriquées.

Aussi, un premier objet de la présente invention réside dans le procédé de préparation d'une suspension aqueuse de matière minérale comprenant les étapes :
a) de mettre à disposition au moins une matière minérale,
b) de préparer une suspension aqueuse comprenant au moins la matière minérale de l'étape a),
c) de broyer la matière minérale de la suspension aqueuse de l'étape b),
d) et éventuellement de sélectionner et/ou concentrer la suspension aqueuse de l'étape c) avant de disperser le concentrat obtenu
caractérisé en ce qu'on ajoute au moins une amine et un polymère vinyl-carboxylique totalement neutralisé par un agent de neutralisation différent d'une amine entre les étapes a) et/ou b) et/ou c) ou pendant l'étape c) ou après l'étape c) pendant ou après la mise en dispersion du concentrat obtenu.

Par « préparer une suspension aqueuse comprenant au moins la matière minérale », on entend dans la présente demande de brevet « former une suspension aqueuse » par ajout de la matière minérale dans l'eau sous agitation avec ou sans addition de dispersants jusqu'à l'obtention d'un extrait sec, exprimé en pourcentage en poids sec de matière minérale par rapport au poids total de la suspension, compris entre 10% et 82%.

Par « sélectionner », on entend dans la présente demande de brevet « éliminer les particules grossières ayant une taille de particules supérieures à 45 µm » par tout moyen connu de l'homme du métier, notamment par la mise en oeuvre de tamis ou de sélecteurs.

Par « concentrer », on entend dans la présente demande de brevet « augmenter la teneur en matière minérale sèche de la suspension aqueuse obtenue à l'étape c) » de sorte que le concentrat obtenu dans le contexte de cette demande de brevet est reconnu par l'homme du métier résulter des moyens de concentration connus dans l'art antérieur, tels que la concentration mécanique, par exemple par la mise en oeuvre de centrifuge ou de filtre-presse ou de tube-presse ou de leurs combinaisons, ou tels que la concentration thermique, par exemple l'évaporation ou tels qu'une combinaison de concentration mécanique et thermique. Le concentrat obtenu de la sorte est aussi connu sous les synonymes de « gâteau » ou « filter cake ».

Ce procédé est aussi caractérisé en ce que le ratio massique amine:polymère vinyl-carboxylique est compris entre 0,05:1 et 0,35-1, préférentiellement entre 0,10:1 et 0,30:1.

Selon une première variante, ce procédé est caractérisé en ce que l'amine est choisie parmi la diméthylamine, la monoéthanolamine, la diéthanolamine, la triéthanolamine, la N- méthyléthanolamine, le 2-amino-2-méthyl-1-propanol, la triisopropanolamine, la 2,3,4,6,7,8,9,10-octahydropyrimido[1,2-a]azepine (DBU ; n° CAS = 6674-22-2), la 2,2'-diazabicyclo[2.2.2]octane (DABCO ; n° CAS = 280-57-9).

Dans une deuxième variante plus préférée, ce procédé est aussi caractérisé en ce que l'amine répond à la formule (I) :

NR₁R₂R₃ (I)

avec R₁, R₂, R₃ identiques ou différents, choisis parmi :
- un radical alkyle ou oxyalkylé linéaire ou ramifié ayant de 1 à 12 atomes de carbone,
- un radical cyclo-alkyle ayant de 3 à 12 atomes de carbone,
- un radical hydroxy-alkyle linéaire ayant de 1 à 6 atomes de carbone,
étant entendu que :
- au plus un groupe R₂ ou R₃ représente l'hydrogène,
- au moins un des groupes R₁, R₂, R₃ comporte un groupement OH,
- au moins un des groupes R₁, R₂, R₃ comporte au moins une ramification en position α de l'atome d'azote.

Selon cette variante, ce procédé est aussi caractérisé en ce que, dans la formule (I), R₁ représente l'hydrogène, R₂ et R₃ étant identiques ou différents, choisis parmi :
- un radical alkyle ou oxyalkylé linéaire ou ramifié ayant de 1 à 12 atomes de carbone,
- un radical cyclo-alkyle ayant de 3 à 12 atomes de carbone,
- un radical hydroxy-alkyle linéaire ayant de 1 à 6 atomes de carbone,
étant entendu que :
- au plus un des groupe R₂ ou R₃ comporte un groupement OH,
- au moins un des groupe R₂ ou R₃ comporte au moins une ramification en position α de l'atome d'azote.

Selon cette variante, ce procédé est aussi caractérisé en ce que, dans la formule (I), chaque radical alkyle ou oxyalkylé ou cyclo-alkyle comporte de 3 à 10, préférentiellement de 3 à 8 atomes de carbone.

Selon cette variante, ce procédé est aussi caractérisé en ce que, dans la formule (I), le ou les radicaux porteurs du groupement OH comporte 2 ou 3, préférentiellement 2 atomes de carbone.

Selon cette variante, ce procédé est aussi caractérisée en ce que, dans la formule (I), R₁ représente l'hydrogène, R₂ et R₃ étant identiques ou différents, choisis parmi :
- un radical alkyle linéaire ou ramifié ou oxyalkylé ayant de 3 à 8 atomes de carbone,
- un radical cyclo-alkyle ayant de 6 à 10 atomes de carbone,
- un radical hydroxy-alkyle linéaire ayant de 2 à 3, préférentiellement 2 atomes de carbone,
étant entendu que :
- au moins un des groupe R₂ ou R₃ comporte un groupement OH,
- au moins un des groupe R₂ ou R₃ comporte au moins une ramification en position α de l'atome d'azote.

Selon cette variante, ce procédé est aussi caractérisée en ce que l'amine est choisie parmi :
- la N-(1-méthylpropyl)-N-(2-hydroxyéthylamine),
- la N-(1,3-diméthylbutyl)-N-(2-hydroxyéthylamine),
- la N-(1-éthyl-3-méthylpentyl)-N-(2-hydroxyéthylamine),
- la N-(3,3',5-triméthylcyclohexyl)-N-(2-hydroxyéthylamine),
- la N-(4-hydroxycyclohexyl)-N-(2-hydroxyéthylamine).

D'autres amines peuvent aussi être mises en oeuvre. On pourra citer les polyamines lourdes telles que la piperazine substituée ou non, l'amino ethyl piperazine substituée ou non, l'amino ethyl éthanol amine, les polyether amines, les amines primaires avec des polyéthylène et/ou polypropylène glycol, les éthylènes amines telles que la 2-(diethylamino) éthyl amine, la 2-(diisopropylamino) éthyl amine, la pentamethyldiethylenetriamine ou encore la N-(2-aminoethyl)ethanol amine, les propylène amines telles que la N3-amine (3-(2-aminoethylamino)propylamine, la 1,3-diaminopropane, les morpholines substituées telles que la N-éthylmorpholine, la N-méthylmorpholine. On pourra également citer les produits commercialisés sous la marque Alpamine™ par le groupe Arkema, et plus particulièrement l'Alpamine™ N72.

Le poids moléculaire des polymères mis en oeuvre n'est pas déterminant, pour autant qu'il ne soit pas trop élevé auquel cas, ledit polymère se comporte comme un agent épaississant du milieu. On peut chiffrer à environ 300 000 g/mol la valeur maximale de ce poids moléculaire. En outre, l'homme du métier sait comment réguler et adapter ce poids moléculaire ; il pourra notamment se reporter aux documents cités au début de la Demande relatant différents polymères acryliques mis en oeuvre pour disperser ou faciliter le broyage dans l'eau une matière minérale.

Ce procédé est aussi caractérisé en ce que le polymère vinyl-carboxylique est totalement neutralisé par au moins un agent de neutralisation choisi parmi les hydroxydes et / ou oxydes de calcium, de magnésium, ou parmi les hydroxydes de sodium, de potassium, de lithium et leurs mélanges.

Ce procédé est aussi caractérisé en ce que ledit polymère vinyl-carboxylique est un homopolymère de l'acide acrylique ou un copolymère de l'acide acrylique avec un autre monomère.

Ce procédé est aussi caractérisé en ce que, pour le copolymère de l'acide acrylique avec un autre monomère, cet autre monomère est choisi parmi l'acide méthacrylique, l'anhydride maléique, l'acide 2-acrylamido-2-méthyl propane sulfonique, les esters phosphoriques des (méth)acrylates d'alkylène glycol et les monomères non ioniques de formule (II) : 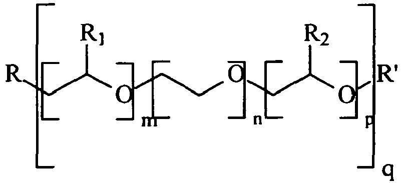 dans laquelle m, n, p et q sont des entiers et m, n, p sont inférieurs à 150, q est supérieur à 0 et au moins un entier parmi m, n et p est non nul, R est un radical comportant une fonction insaturée polymérisable, R₁ et R₂ sont identiques ou différents et représentent des atomes d'hydrogène ou des groupements alkyles, R' représente l'hydrogène ou un radical hydrocarboné ayant 1 à 40 atomes de carbone, ou un groupement ionique ou ionisable.

Ce procédé est aussi caractérisé en ce que ladite suspension aqueuse, après dispersion et/ou broyage, présente un extrait sec exprimé en pourcentage en poids sec de matière minérale par rapport à son poids total, compris entre 10 % et 82 %, préférentiellement entre 50 % et 81 %, très préférentiellement entre 65 % et 78 %.

Ce procédé est aussi caractérisé en ce que ladite suspension aqueuse présente une teneur en poids sec de polymère acrylique, par rapport au poids sec total de matière minérale, comprise entre 0,01 % et 5,00 %, préférentiellement entre 0,01 % et 2,00 %, et très préférentiellement entre 0,05 % et 1,00 %.

Ce procédé est aussi caractérisé en ce que la matière minérale est choisie parmi le carbonate de calcium naturel, synthétique ou précipité, le talc, le kaolin, et leurs mélanges, préférentiellement parmi le carbonate de calcium naturel, synthétique ou précipité et leurs mélanges, et est préférentiellement un carbonate de calcium naturel.

Ce carbonate de calcium naturel est préférentiellement choisi parmi le calcaire, le marbre, la calcite, la craie, la dolomite et leurs mélanges.

Les exemples qui suivent permettront d'illustrer l'invention, sans toutefois en limiter la portée.

### EXEMPLES

Toutes les répartitions granulométriques ainsi que les diamètres indiqués sont déterminés avec un appareil Sedigraph™ 5100, commercialisé par la société MICROMERITICS™.

Dans tous les essais, les ppm de produits secs sont indiqués par rapport au poids sec de matière minérale utilisée.

### Exemple 1

Cet exemple décrit le broyage d'un carbonate de calcium naturel (calcite d'Orgon-France-) dans l'eau, par mise en oeuvre au cours de l'étape de broyage d'un homopolymère de l'acide acrylique, seul ou en combinaison avec certaines amines.

Le broyage est réalisé sur un dispositif de laboratoire de type Dyno Mill™ de type KDL, le volume de la chambre de broyage étant de 1,4 litre, et dont le corps broyant est constitué de 2 500 grammes de billes de corindon de diamètre compris entre 0,6 et 1 mm.

De manière pratique, on introduit d'abord le polymère acrylique, puis l'amine, et on réalise l'opération de broyage.

En outre, le broyage est réalisé selon des techniques bien connues de l'homme du métier, et notamment décrites dans les documents FR 2 539 137 A1, FR 2 683 536 A1, FR 2 683 537 A1, FR 2 683 538 A1, FR 2 683 539 A1 et FR 2 802 830 A1 et FR 2 818 165 A1.

### Essai n° 1-a

Cet essai illustre l'art antérieur et met en oeuvre 3 500 ppm d'un homopolymère de l'acide acrylique, dont 70 % en mole des sites carboxyliques sont neutralisés par l'ion sodium et 30 % par l'ion calcium, et de poids moléculaire tel que déterminé par GPC égal à 5 500 g/mol.

### Essai n° 1-b

Cet essai illustre l'art antérieur et met en oeuvre 3 500 ppm d'un homopolymère de l'acide acrylique, dont la totalité des sites carboxyliques est neutralisée par une amine qui est la 2-amino-2-méthyl-1-propanol, et de poids moléculaire tel que déterminé par GPC égal à 5 500 g/mol. Cet essai illustre donc l'art antérieur tel que décrit dans le document US 4 370 171 A1 déjà discuté auparavant, où le dispersant est préalablement neutralisé avec une alcanolamine.

### Essai n° 2

Cet essai illustre l'invention et met en oeuvre 3 300 ppm d'un homopolymère de l'acide acrylique, dont 70 % en mole des sites carboxyliques sont neutralisés par l'ion sodium et 30 % par l'ion calcium, et de poids moléculaire tel que déterminé par GPC égal à 5 500 g/mol, en combinaison avec 800 ppm d'une amine de formule (I) qui est la N-(1-méthylpropyl)-N-(2-hydroxyéthylamine).

### Essai n° 3

Cet essai illustre l'invention et met en oeuvre 3 150 ppm d'un homopolymère de l'acide acrylique, dont 70 % en mole des sites carboxyliques sont neutralisés par l'ion sodium et 30 % par l'ion calcium, et de poids moléculaire tel que déterminé par GPC égale à 5 500 g/mol, en combinaison avec 800 ppm d'une amine de formule (I) qui est la N-(1-méthylpropyl)-N-(2-hydroxyéthylamine).

Pour chacun des essais n° 1 à 3, les mesures des extraits secs (ES), du pourcentage en poids de particules ayant un diamètre inférieure à 2 µm (% < 2 µm) et des viscosités Brookfield™ à 25 °C et à 10 tours / minute à t=0 (Bk10 t0) et à t=8 jours après agitation (Bk10 t8) sont indiquées dans le tableau 1.

**Tableau 1**

| Essai n° | 1-a | 1-b | 2 | 3 |
|---|---|---|---|---|
| Art Antérieur INvention | AA | AA | IN | IN |
| Dispersant (ppm) | 3500 | 3500 | 3300 | 3150 |
| Amine (ppm) | 0 | 0 | 800 | 800 |
| ES (%) | 78,3 | 78,3 | 78,4 | 78,5 |
| %<2 µm | 59 | 59 | 60 | 59,5 |
| Bk10 t0 (mPa.s) | 180 | 180 | 200 | 200 |
| Bk10 t8 (mPa.s) | 200 | 195 | 180 | 190 |

Ces résultats démontrent que l'ajout d'une amine permet de diminuer la dose de dispersant acrylique mis en oeuvre, pour des valeurs de viscosités Brookfield™ comparables et stables dans le temps.

### Exemple 2

Cet exemple décrit le broyage d'un carbonate de calcium naturel (calcite d'Orgon-France-) dans l'eau en présence d'un homopolymère de l'acide acrylique et d'éventuellement une amine.

Le broyage est réalisé dans les mêmes conditions que celles décrites dans l'exemple précédent, à l'exception de l'essai n° 8, où l'amine est introduite dans la suspension, après broyage.

### Essai n° 4

Cet essai illustre l'art antérieur et met en oeuvre 4 500 ppm d'un homopolymère de l'acide acrylique, totalement neutralisé par l'ion sodium, et de poids moléculaire tel que déterminé par GPC égal à 5 500 g/mol.

### Essai n° 5

Cet essai illustre l'invention et met en oeuvre 4 500 ppm d'un homopolymère de l'acide acrylique, totalement neutralisé par l'ion sodium, et de poids moléculaire tel que déterminé par GPC égale à 5 500 g/mol, en combinaison avec 800 ppm d'une amine de formule (I) qui est la N-(1-méthylpropyl)-N-(2-hydroxyéthylamine).

### Essai n° 6

Cet essai illustre l'invention et met en oeuvre 4 500 ppm d'un homopolymère de l'acide acrylique, totalement neutralisé par l'ion sodium, et de poids moléculaire tel que déterminé par GPC égal à 5 500 g/mol, en combinaison avec 800 ppm de 2-amino-2-méthyl-1-propanol (AMP).

### Essai n° 7

Cet essai illustre l'invention et met en oeuvre 4 000 ppm d'un homopolymère de l'acide acrylique, totalement neutralisé par l'ion sodium, et de poids moléculaire tel que déterminé par GPC égal à 5 500 g/mol, en combinaison avec 800 ppm d'une amine de formule (I) qui est la N-(1-méthylpropyl)-N-(2-hydroxyéthylamine).

### Essai n° 8

Cet essai illustre l'invention et met en oeuvre au cours de l'étape de broyage 4 500 ppm d'un homopolymère de l'acide acrylique, totalement neutralisé par l'ion sodium, et de poids moléculaire tel que déterminé par GPC égal à 5 500 g/mol. 800 ppm d'une amine de formule (I) qui est la N-(1-méthylpropyl)-N-(2-hydroxyéthylamine) ont ensuite été introduits dans la suspension, après broyage.

Pour chacun des essais n° 4 à 8, les mesures des extraits secs (ES), du pourcentage en poids de particules ayant un diamètre inférieur à 2 µm (% < 2 µm) et des viscosités Brookfield™ à 25 °C et à 10 tours / minute à t=0 (Bk10 t0) et à t=8 jours après agitation (Bk10 t8) sont indiquées dans le tableau 2.

**Tableau 2**

| Essai n° | 4 | 5 | 6 | 7 | 8 |
|---|---|---|---|---|---|
| Art Antérieur INvention | AA | IN | IN | IN | IN |
| Dispersant (ppm) | 4500 | 4500 | 4500 | 4000 | 4500 |
| Amine (ppm) | 0 | 800 | 800 | 800 | 800 |
| ES (%) | 76,0 | 76,1 | 76,2 | 76,2 | 76,2 |
| %<2 µm | 88,3 | 88,4 | 88,4 | 88,4 | 88,4 |
| Bk10 t0 (mPa.s) | 1570 | 770 | 770 | 800 | 790 |
| Bk10 t8 (mPa.s) | 2940 | 1470 | 2010 | 1980 | 1780 |

Les résultats selon les essais n° 5, 6 et 8 en comparaison avec ceux obtenus selon l'essai n° 4, démontrent que l'addition d'une amine permet de diminuer la valeur des viscosités Brookfield™, pour une même dose de dispersant acrylique.

L'essai n° 7 démontre quant à lui qu'il est possible de réduire la quantité de dispersant acrylique par ajout d'une amine, tout en réduisant également la valeur des viscosités Brookfield™.

Enfin, l'amine de formule (I) mise en oeuvre dans l'essai n° 5 permet d'obtenir de meilleurs résultats que l'AMP selon l'essai n° 6. Ce résultat est même confirmé pour une dose de dispersant acrylique inférieure dans le cas de l'amine de formule (I), selon les essais n° 7 et 8.

### Exemple 3

Cet exemple décrit le broyage d'un carbonate de calcium naturel (calcite d'Orgon-France-) dans l'eau, par mise en oeuvre au cours de l'étape de broyage d'un homopolymère de l'acide acrylique, seul ou en combinaison avec certaines amines.

Le broyage est réalisé dans les mêmes conditions que celles décrites dans l'exemple 1.

### Essai n° 9

Cet essai illustre l'art antérieur et met en oeuvre 6 500 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol.

### Essai n° 10

Cet essai illustre l'invention et met en oeuvre 6 500 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 800 ppm de 2-amino-2-méthyl-1-propanol (AMP).

### Essai n° 11

Cet essai illustre l'invention et met en oeuvre 5 850 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 800 ppm de 2-amino-2-méthyl-1-propanol (AMP).

### Essai n° 12

Cet essai illustre l'invention et met en oeuvre 5 850 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 800 ppm d'une amine de formule (I) qui est la N-(1-méthylpropyl)-N-(2-hydroxyéthylamine).

### Essai n° 13

Cet essai illustre l'invention et met en oeuvre 5 850 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 800 ppm de 2-aminoéthanol (éthanolamine ; n° CAS = 141-43-5).

### Essai n° 14

Cet essai illustre l'invention et met en oeuvre 5 850 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 800 ppm de 2,2'-Iminodiéthanol (diéthanolamine ; n° CAS = 111-42-2).

### Essai n° 15

Cet essai illustre l'invention et met en oeuvre 5 850 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 800 ppm de 2,2',2"-Nitrilotriethanol (triéthanolamine ; n° CAS = 102-71-6).

### Essai n° 16

Cet essai illustre l'invention et met en oeuvre 5 850 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 800 ppm de 2,3,4,6,7,8,9,10-octahydropyrimido[1,2-a]azepine (DBU ; n° CAS = 6674-22-2).

### Essai n° 17

Cet essai illustre l'invention et met en oeuvre 5 850 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 800 ppm de 2,2'-diazabicyclo[2.2.2]octane (DABCO ; n° CAS = 280-57-9).

### Essai n° 18

Cet essai illustre l'invention et met en oeuvre 5 850 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec un mélnage d'amines constitué de 400 ppm d'une amine de formule (I) qui est la N-(1-méthylpropyl)-N-(2-hydroxyéthylamine) et 400 ppm de 2-aminoéthanol (éthanolamine ; n° CAS = 141-43-5).

Pour les essais n° 9 à 18, les mesures des extraits secs (ES), du pourcentage en poids de particules ayant un diamètre inférieur à 2 µm (% < 2 µm) et des viscosités Brookfield™ à 25 °C et à 10 tours / minute à t=0 (Bk10 t0) et à t=8 jours après agitation (Bk10 t8) sont indiquées dans le tableau 3.

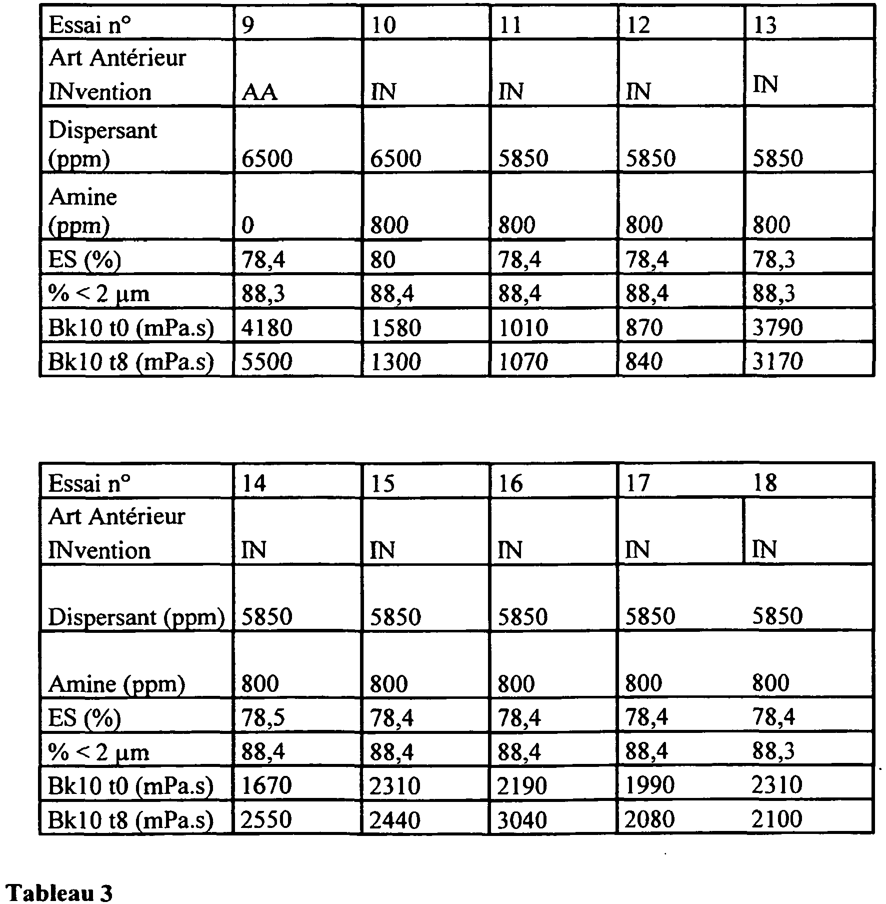

Par comparaison entre les essais n° 9 et 10 réalisés à dose équivalente de polymère acrylique, on montre que l'amine permet de broyer à plus haut extrait sec, tout en diminuant les valeurs de viscosités Brookfield™.

Les essais n° 11 à 18, par comparaison avec l'essai n° 9, démontrent qu'en ajoutant une amine, on parvient à réduire la quantité de polymère acrylique, tout en obtenant pour le même extrait sec des valeurs de viscosités Brookfield moins élevées.

Les meilleurs résultats sont obtenus pour l'amine de formule (I) selon l'essai n° 12. Enfin, on a réalisé un dernier essai n° 19, hors invention, illustrant une dose identique pour le polymère et l'amine (comme selon le document US 4 370 171 A1).

Il met en oeuvre 2 900 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 2 900 ppm de N-(1-méthylpropyl)-N-(2-hydroxyéthylamine).

On n'est pas parvenu à broyer à extrait sec de 77 %, de manière à obtenir 88 % en poids de particules ayant un diamètre inférieur à 2 µm comme dans les autres essais : la suspension s'avérait ici beaucoup trop visqueuse.

### Exemple 4

Dans les essais qui suivent, un carbonate de calcium grossier (calcite d'Orgon-France-) est mis en suspension dans l'eau à 20 % en poids de concentration. Cette suspension est agitée pour prévenir toute sédimentation ; elle circule dans un broyeur du type Dyno-Mill™ à cylindre fixe et impulseur tournant, dont le corps broyant est constitué de 2 900 grammes de billes de corindon de diamètre compris entre 0,6 mm et 1 mm.

A ce stade, la répartition granulométrique des particules est telle que 60 % en poids de celles-ci ont un diamètre inférieur à 1 µm.

Le carbonate de calcium est alors concentré par tout moyen bien connu de l'homme de métier jusqu'à l'obtention de la concentration requise pour l'application égale à 67,5 % en poids de carbonate de calcium.

On obtient alors un gâteau de filtration qu'il est indispensable de redisperser afin qu'il devienne manipulable et ce, par mise en oeuvre d'un polymère acrylique seul ou en combinaison avec une amine.

Ce procédé très particulier dit de « broyage à faible concentration sans agent dispersant puis reconcentration » est notamment décrit en détails dans le document EP 2 044 159. Ces essais de dispersion de gâteau de filtration sont réalisés en présence d'un copolymère de l'acide acrylique et de l'anhydride maléïque, et éventuellement d'une amine.

### Essai n° 20

Cet essai de dispersion illustre l'art antérieur ; il met en oeuvre 3 500 ppm d'un copolymère de l'acide acrylique et de l'anhydride maléique, constitué d'acide acrylique et d'anhydride maléique dans un rapport molaire r égal à 1,36:1, de poids moléculaire égal à 19 500 g/mole et dont 100 % en mole des fonctions acides sont neutralisées par l'hydroxyde de sodium.

### Essai n° 21

Cet essai illustre l'invention et met en oeuvre 3 500 ppm du même copolymère que dans l'essai n° 1, en combinaison avec 800 ppm de N-(1-méthylpropyl)-N-(2-hydroxyéthylamine).

### Essai n° 22

Cet essai illustre l'invention et met en oeuvre 3 200 ppm du même copolymère que dans l'essai n° 1, en combinaison avec 800 ppm de N-(1-méthylpropyl)-N-(2-hydroxyéthylamine).

Pour les essais n° 20 à 22, les mesures des extraits secs (ES) et des viscosités Brookfield™ à 25 °C et à 10 tours / minute à t=0 (Bk10 t0) et à t=8 jours après agitation (Bk10 t8) sont indiquées dans le tableau 4.

**Tableau 4**

| Essai n° | 20 | 21 | 22 |
|---|---|---|---|
| Art Antérieur INvention | AA | IN | IN |
| Dispersant (ppm) | 3 500 | 3 500 | 3200 |
| Amine (ppm) | 0 | 800 | 800 |
| ES (%) | 65,3 | 65,2 | 65,4 |
| Bk10 t0 (mPa.s) | 310 | 160 | 200 |
| Bk10 t8 (mPa.s) | 600 | 300 | 580 |

Ces résultats démontrent que l'ajout d'une amine permet, à dose constante de polymère acrylique d'améliorer la rhéologie de la suspension obtenue, ou de diminuer la quantité de dispersant acrylique tout en maintenant la viscosité Brookfield™ à un niveau quasi identique.

### Exemple 5

Cet exemple décrit le broyage d'un carbonate de calcium naturel (calcite d'Orgon-France-) dans l'eau, par mise en oeuvre au cours de l'étape de broyage d'un homopolymère de l'acide acrylique, seul ou en combinaison avec certaines amines. Le broyage est réalisé dans les mêmes conditions que celles décrites dans l'exemple 1.

### Essai n° 23

Cet essai illustre l'art antérieur et met en oeuvre 12 000 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol.

### Essai n° 24

Cet essai illustre l'invention et met en oeuvre 10 000 ppm d'un homopolymère de l'acide acrylique, dont 50 % en mole des sites carboxyliques sont neutralisés par l'ion magnésium et 50 % par l'ion sodium, et de poids moléculaire tel que déterminé par GPC égal à 5 500 g/mol, en combinaison avec 500 ppm de 2[(methylpropyl)amino]ethan-1-ol (CAS 35265-04-4)

Pour les essais n° 23 et 24, les mesures des extraits secs (ES), du pourcentage en poids de particules ayant un diamètre inférieure à 1 µm (% < 1 µm) et des viscosités Brookfield™ à 25 °C et à 100 tours / minute (valeur après 1 min) à t=0 (Bk100 t0) et à t=14 jours avant et après agitation (Bk100 t14) sont indiquées dans le tableau 5.

**Tableau 5**

| Essai n° | 23 | 24 |
|---|---|---|
| Art Antérieur INvention | AA | IN |
| Dispersant (ppm) | 12 000 | 10 000 |
| Amine (ppm) | 0 | 500 |
| ES (%) | 76.0 | 75.5 |
| % < 1 µm | 78 | 78 |
| Bk 100 t0 (mPas) | 388 | 311 |
| Bk100 t14 après agitation (mPas) | 351 | 314 |
| Bk100 t14 avant agitation (mPas) | 573 | 668 |

Ces résultats démontrent que l'ajout d'une amine permet de diminuer la quantité de dispersant acrylique (dans cet exemple une réduction de 20% du dispersant acrylique), tout en maintenant la viscosité Brookfield^{™} à un niveau quasi identique et stable dans le temps.

## Revendications

1. Procédé de préparation d'une suspension aqueuse de matière minérale comprenant les étapes :
a) de mettre à disposition au moins une matière minérale,
b) de préparer une suspension aqueuse comprenant au moins la matière minérale de l'étape a),
c) de broyer la matière minérale de la suspension aqueuse de l'étape b),
d) et éventuellement de sélectionner et/ou concentrer la suspension aqueuse de l'étape c) avant de disperser le concentrat obtenu
**caractérisé en ce qu'**on ajoute au moins une amine et un polymère vinyl-carboxylique totalement neutralisé par un agent de neutralisation différent d'une amine entre les étapes a) et/ou b) et/ou c) ou pendant l'étape c) ou après l'étape c) pendant ou après la mise en dispersion du concentrat obtenu.

2. Procédé de préparation d'une suspension aqueuse de matière minérale selon la revendication 1, **caractérisé en ce que** le ratio massique amine:polymère vinyl-carboxylique est compris entre 0,05:1 et 0,35:1, préférentiellement entre 0,10:1 et 0,25:1.

3. Procédé de préparation d'une suspension aqueuse de matière minérale selon l'une des revendications 1 ou 2, **caractérisé en ce que** l'amine est choisie parmi la diméthylamine, la monoéthanolamine, la diéthanolamine, la triéthanolamine, la N- méthyléthanolamine, le 2-amino-2-méthyl-1-propanol, la triisopropanolamine, la 2,3,4,6,7,8,9,10-octahydropyrimido[1,2-a]azepine (DBU ; n° CAS = 6674-22-2), la 2,2'-diazabicyclo[2.2.2]octane (DABCO ; n° CAS = 280-57-9).

4. Procédé de préparation d'une suspension aqueuse de matière minérale selon l'une des revendications 1 ou 2, **caractérisé en ce que** l'amine répond à la formule (I) :
NR₁R₂R₃ (I)
avec R₁, R₂, R₃ identiques ou différents, choisis parmi :
- un radical alkyle ou oxyalkylé linéaire ou ramifié ayant de 1 à 12 atomes de carbone,
- un radical cyclo-alkyle ayant de 3 à 12 atomes de carbone,
- un radical hydroxy-alkyle linéaire ayant de 1 à 6 atomes de carbone,
étant entendu que :
- au plus un groupe R₂ ou R₃ représente l'hydrogène,
- au moins un des groupes R₁, R₂, R₃ comporte un groupement OH,
- au moins un des groupes R₁, R₂, R₃ comporte au moins une ramification en position α de l'atome d'azote.

5. Procédé de préparation d'une suspension aqueuse de matière minérale selon la revendication 4, **caractérisé en ce que**, dans la formule (I), R₁ représente l'hydrogène, R₂ et R₃ étant identiques ou différents, choisis parmi :
- un radical alkyle ou oxyalkylé linéaire ou ramifié ayant de 1 à 12 atomes de carbone,
- un radical cyclo-alkyle ayant de 3 à 12 atomes de carbone,
- un radical hydroxy-alkyle linéaire ayant de 1 à 6 atomes de carbone,
étant entendu que :
- au plus un des groupe R₂ ou R₃ comporte un groupement OH,
- au moins un des groupe R₂ ou R₃ comporte au moins une ramification en position α de l'atome d'azote.

6. Procédé de préparation d'une suspension aqueuse de matière minérale selon la revendication 4, **caractérisé en ce que**, dans la formule (I), chaque radical alkyle ou oxyalkylé ou cyclo-alkyle comporte de 3 à 10, préférentiellement de 3 à 8 atomes de carbone.

7. Procédé de préparation d'une suspension aqueuse de matière minérale selon la revendication 4, **caractérisé en ce que**, dans la formule (I), le ou les radicaux porteurs du groupement OH comporte 2 ou 3, préférentiellement 2 atomes de carbone.

8. Procédé de préparation d'une suspension aqueuse de matière minérale selon la revendication 4, **caractérisé en ce que**, dans la formule (I), R₁ représente l'hydrogène, R₂ et R₃ étant identiques ou différents, choisis parmi :
- un radical alkyle ou oxyalkylé linéaire ou ramifié ayant de 3 à 8 atomes de carbone,
- un radical cyclo-alkyle ayant de 6 à 10 atomes de carbone,
- un radical hydroxy-alkyle linéaire ayant de 2 à 3, préférentiellement 2 atomes de carbone,
étant entendu que :
- au moins un des groupe R₂ ou R₃ comporte un groupement OH,
- au moins un des groupe R₂ ou R₃ comporte au moins une ramification en position α de l'atome d'azote.

9. Procédé de préparation d'une suspension aqueuse de matière minérale selon l'une des revendications 4 à 8, **caractérisé en ce que** l'amine est choisie parmi :
- la N-(1-méthylpropyl)-N-(2-hydroxyéthylamine),
- la N-(1,3-diméthylbutyl)-N-(2-hydroxyéthylamine),
- la N-( 1-éthyl-3-méthylpentyl)-N-(2-hydroxyéthylamine),
- la N-(3,3',5-triméthylcyclohexyl)-N-(2-hydroxyéthylamine),
- la N-(4-hydroxycyclohexyl)-N-(2-hydroxyéthylamine).

10. Procédé de préparation d'une suspension aqueuse de matière minérale selon l'une des revendications 1 à 9, **caractérisé en ce que** le polymère vinyl-carboxylique est totalement neutralisé par au moins un agent de neutralisation choisi parmi les hydroxydes et / ou oxydes de calcium, de magnésium, ou parmi les hydroxydes de sodium, de potassium, de lithium et leurs mélanges.

11. Procédé de préparation d'une suspension aqueuse de matière minérale selon l'une des revendications 1 à 10, **caractérisé en ce que** ledit polymère vinyl-carboxylique est un homopolymère de l'acide acrylique ou un copolymère de l'acide acrylique avec un autre monomère.

12. Procédé de préparation d'une suspension aqueuse de matière minérale selon l'une des revendications 1 à 11, **caractérisé en ce que**, pour le copolymère de l'acide acrylique avec un autre monomère, cet autre monomère est choisi parmi l'acide méthacrylique, l'anhydride maléique, l'acide 2-acrylamido-2-méthyl propane sulfonique, les esters phosphoriques des (méth)acrylates d'alkylène glycol et les monomères non ioniques de formule (II) : 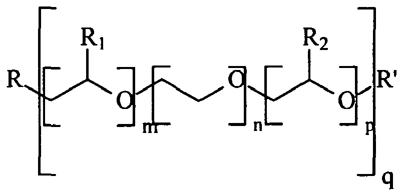 dans laquelle m, n, p et q sont des entiers et m, n, p sont inférieurs à 150, q est supérieur à 0 et au moins un entier parmi m, n et p est non nul, R est un radical comportant une fonction insaturée polymérisable, R₁ et R₂ sont identiques ou différents et représentent des atomes d'hydrogène ou des groupements alkyles, R' représente l'hydrogène ou un radical hydrocarboné ayant 1 à 40 atomes de carbone, ou un groupement ionique ou ionisable.

13. Procédé de préparation d'une suspension aqueuse de matière minérale selon l'une des revendications 1 à 12, **caractérisé en ce que** ladite suspension aqueuse, après dispersion et/ou broyage, présente un extrait sec exprimé en pourcentage en poids sec de matière minérale par rapport à son poids total, compris entre 10 % et 82 %, préférentiellement entre 50 % et 81 %, très préférentiellement entre 65 % et 78 %.

14. Procédé de préparation d'une suspension aqueuse de matière minérale selon l'une des revendications 1 à 13, **caractérisé en ce que** ladite suspension aqueuse présente une teneur en poids sec de polymère vinyl-carboxylique, par rapport au poids sec total de matière minérale, comprise entre 0,01 % et 5,00 %, préférentiellement entre 0,01 % et 2,00 %, et très préférentiellement entre 0,05 % et 1,00 %.

15. Procédé de préparation d'une suspension aqueuse de matière minérale selon l'une des revendications 1 à 14, **caractérisé en ce que** la matière minérale est choisie parmi le carbonate de calcium naturel, synthétique ou précipité, le talc, le kaolin, et leurs mélanges, préférentiellement parmi le carbonate de calcium naturel, synthétique ou précipité et leurs mélanges, et est préférentiellement un carbonate de calcium naturel.

16. Procédé de préparation d'une suspension aqueuse de matière minérale selon l'une des revendications 1 à 15, **caractérisé en ce que** le carbonate de calcium naturel est choisi parmi le calcaire, le marbre, la calcite, la craie, la dolomite et leurs mélanges.

17. Utilisation de la suspension aqueuse de matière minérale obtenue selon l'une des revendications 1 à 16 au domaine du papier, tel que la charge de masse et le couchage du papier, de la peinture et du plastique.

## Patentansprüche

1. Verfahren zur Herstellung einer wässrigen Mineralstoffsuspension, umfassend die Schritte:
a) Bereitstellen wenigstens eines Mineralstoffmaterials,
b) Zubereiten einer wässrigen Suspension umfassend wenigstens das Mineralstoffmaterial aus Schritt a)
c) Vermahlen des Mineralstoffmaterials der wässrigen Suspension aus Schritt b),
d) gegebenenfalls Selektieren und/oder Konzentrieren der wässrigen Suspension aus Schritt c) vor dem Dispergieren des erhaltenen Konzentrats,
**dadurch gekennzeichnet, dass** wenigstens ein Amin und ein Vinylcarbonsäure-Polymer, welches durch ein Neutralisationsmittel, das sich von dem Amin unterscheidet, vollständig neutralisiert ist, zwischen den Schritten a) und/oder b) und/oder c) oder während Schritt c) oder nach Schritt c), während oder nach dem Dispergieren des erhaltenen Konzentrats zugegeben wird.

2. Verfahren zur Herstellung einer wässrigen Mineralstoffsuspension nach Anspruch 1, **dadurch gekennzeichnet, dass** das Massenverhältnis von Amin:Vinylcarbonsäure-Polymer zwischen 0,05:1 und 0,35:1 beträgt, bevorzugt zwischen 0,10:1 und 0,25:1.

3. Verfahren zur Herstellung einer wässrigen Mineralstoffsuspension nach Anspruch 1 oder 2, **dadurch gekennzeichnet, dass** das Amin ausgewählt ist aus Dimethylamin, Monoethanolamin, Diethanolamin, Triethanolamin, N-Methylethanolamin, 2-Amino-2-methyl-1-propanol, Triisopropanolamin, 2,3,4,6,7,8,9,10-Octahydropyrimido[1,2-a]azepin (DBU; CAS Nr. 6674-22-2), 2,2'-Diazabicyclo[2.2.2]octan (DABCO; CAS Nr. 280-57-9).

4. Verfahren zur Herstellung einer wässrigen Mineralstoffsuspension nach Anspruch 1 oder 2, **dadurch gekennzeichnet, dass** das Amin der Formel (I) entspricht:
NR₁R₂R₃ (I)
worin R₁, R₂, R₃ gleich oder verschieden sind und ausgewählt sind aus:
- einem linearen oder verzweigten Alkyl- oder Oxyalkylrest mit 1 bis 12 Kohlenstoffatomen,
- einem Cycloalkylrest mit 3 bis 12 Kohlenstoffatomen,
- einem linearen Hydroxyalkylrest mit 1 bis 6 Kohlenstoffatomen,
und wobei:
- wenigstens ein Rest R₂ oder R₃ Wasserstoff darstellt,
- wenigstens einer der Reste R₁, R₂, R₃ eine OH-Gruppe aufweist,
- wenigstens einer der Reste R₁, R₂, R₃ wenigstens eine Verzweigung in α-Stellung zum Stickstoffatom aufweist.

5. Verfahren zur Herstellung einer wässrigen Mineralstoffsuspension nach Anspruch 4, **dadurch gekennzeichnet, dass** in Formel (I) R₁ Wasserstoff darstellt, R₂ und R₃ gleich oder verschieden sind und ausgewählt sind aus:
- einem linearen oder verzweigten Alkyl- oder Oxyalkylrest mit 1 bis 12 Kohlenstoffatomen,
- einem Cycloalkylrest mit 3 bis 12 Kohlenstoffatomen,
- einem linearen Hydroxyalkylrest mit 1 bis 6 Kohlenstoffatomen,
und wobei:
- wenigstens ein Rest R₂ oder R₃ eine OH-Gruppe aufweist,
- wenigstens einer der Reste R₂ oder R₃ wenigstens eine Verzweigung in α-Stellung zum Stickstoffatom aufweist.

6. Verfahren zur Herstellung einer wässrigen Mineralstoffsuspension nach Anspruch 4, **dadurch gekennzeichnet, dass** in Formel (I) jeder Alkyl- oder Oxyalkyl- oder Cycloalkylrest 3 bis 10, bevorzugt 3 bis 8 Kohlenstoffatome aufweist.

7. Verfahren zur Herstellung einer wässrigen Mineralstoffsuspension nach Anspruch 4, **dadurch gekennzeichnet, dass** in Formel (I) der oder die Reste, der bzw. die die OH-Gruppe trägt bzw. tragen, 2 oder 3, bevorzugt 2 Kohlenstoffatome aufweist.

8. Verfahren zur Herstellung einer wässrigen Mineralstoffsuspension nach Anspruch 4, **dadurch gekennzeichnet, dass** in Formel (I) R₁ Wasserstoff darstellt, R₂ und R₃ gleich oder verschieden sind und ausgewählt sind aus:
- einem linearen oder verzweigten Alkyl- oder Oxyalkylrest mit 3 bis 8 Kohlenstoffatomen,
- einem Cycloalkylrest mit 6 bis 10 Kohlenstoffatomen,
- einem linearen Hydroxyalkylrest mit 2 bis 3 Kohlenstoffatomen, bevorzugt 2 Kohlenstoffatomen,
und wobei:
- wenigstens ein Rest R₂ oder R₃ eine OH-Gruppe aufweist,
- wenigstens einer der Reste R₂ oder R₃ wenigstens eine Verzweigung in α-Stellung zum Stickstoffatom aufweist.

9. Verfahren zur Herstellung einer wässrigen Mineralstoffsuspension nach einem der Ansprüche 4 bis 8, **dadurch gekennzeichnet, dass** das Amin ausgewählt ist aus:
- N-(1-Methylpropyl)-N-(2-hydroxyethylamin),
- N-(1,3-Dimethylbutyl)-N-(2-hydroxyethylamin),
- N-(1-Ethyl-3-methylpentyl)-N-(2-hydroxyethylamin),
- N-(3,3',5-Trimethylcyclohexyl)-N-(2-hydroxyethylamin),
- N-(4-Hydroxycyclohexyl)-N-(2-hydroxyethylamin).

10. Verfahren zur Herstellung einer wässrigen Mineralstoffsuspension nach einem der Ansprüche 1 bis 9, **dadurch gekennzeichnet, dass** das Vinylcarbonsäure-Polymer vollständig neutralisiert ist durch wenigstens ein Neutralisationsmittel, ausgewählt aus Hydroxiden und/oder Oxiden von Calcium, von Magnesium, oder aus Hydroxiden von Natrium, von Kalium, von Lithium sowie ihren Gemischen.

11. Verfahren zur Herstellung einer wässrigen Mineralstoffsuspension nach einem der Ansprüche 1 bis 10, **dadurch gekennzeichnet, dass** das Vinylcarbonsäure-Polymer ein Homopolymer von Acrylsäure oder ein Copolymer von Acrylsäure mit einem anderen Monomer ist.

12. Verfahren zur Herstellung einer wässrigen Mineralstoffsuspension nach einem der Ansprüche 1 bis 11, **dadurch gekennzeichnet, dass** bei dem Copolymer von Acrylsäure mit einem anderen Monomer das andere Monomer ausgewählt ist aus Methacrylsäure, Maleinsäureanhydrid, 2-Acrylamido-2-methylpropansulfonsäure, den Phosphorsäureestem der (Meth)acrylate von Alkylenglycol sowie den nicht-ionischen Monomeren der Formel (II): 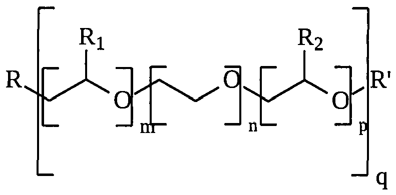 worin m, n, p und q ganze Zahlen und m, n, p kleiner 150 sind, q grösser 0 ist, und wenigstens eines von m, n und p ungleich 0 ist, R ein Rest mit einer ungesättigten polymerisierbaren Funktion ist, R₁ und R₂ gleich oder verschieden sind und Wasserstoffatome oder Alkylgruppen darstellen, R' Wasserstoff oder einen Kohlenwasserstoffrest mit 1 bis 40 Kohlenstoffatomen darstellt, oder eine ionische oder eine ionisierbare Gruppe.

13. Verfahren zur Herstellung einer wässrigen Mineralstoffsuspension nach einem der Ansprüche 1 bis 12, **dadurch gekennzeichnet, dass** die wässrige Suspension nach der Dispersion und/oder dem Vermahlen einen Feststoffgehalt, ausgedrückt in Trockengewichtsprozent des Mineralstoffs bezogen auf ihr Gesamtgewicht, von zwischen 10 % und 82 % aufweist, bevorzugt von zwischen 50 % und 81 %, am meisten bevorzugt zwischen 65 % und 78 %.

14. Verfahren zur Herstellung einer wässrigen Mineralstoffsuspension nach einem der Ansprüche 1 bis 13, **dadurch gekennzeichnet, dass** die wässrige Suspension einen Trockengewichtsgehalt des Vinylcarbonsäure-Polymers aufweist, der bezogen auf das Gesamttrockengewicht des Mineralstoffmaterials zwischen 0,01 % und 5,00 % liegt, bevorzugt zwischen 0,01 % und 2,00 %, und am meisten bevorzugt zwischen 0,05 % und 1,00 %.

15. Verfahren zur Herstellung einer wässrigen Mineralstoffsuspension nach einem der Ansprüche 1 bis 14, **dadurch gekennzeichnet, dass** das Mineralstoffmaterial ausgewählt ist aus natürlichem Calciumcarbonat, synthetischem oder gefälltem Calciumcarbonat, Talk, Kaolin, ihren Gemischen, bevorzugt aus natürlichem Calciumcarbonat, synthetischem oder gefälltem Calciumcarbonat, sowie ihren Gemischen, und ist bevorzugt ein natürliches Calciumcarbonat.

16. Verfahren zur Herstellung einer wässrigen Mineralstoffsuspension nach einem der Ansprüche 1 bis 15, **dadurch gekennzeichnet, dass** das natürliche Calciumcarbonat ausgewählt ist aus Kalkstein, Marmor, Calcit, Kreide, Dolomit sowie ihren Gemischen.

17. Verwendung der wässrigen Mineralstoffsuspension, erhalten gemäss einem der Ansprüche 1 bis 16, auf dem Papiergebiet, wie in der Papiermasse und dem Papierstrich, dem Farbengebiet und dem Kunststoffgebiet.

## Claims

1. A process for preparing an aqueous suspension of mineral matter comprising the steps:
a) making available at least one mineral matter,
b) preparing an aqueous suspension comprising at least the mineral matter of step a),
c) grinding the mineral matter from the aqueous suspension of step b),
d) and possibly selecting and / or concentrating the aqueous suspension of step c) before dispersing the concentrate obtained
**characterized in that** at least one amine and a vinyl carboxylic polymer completely neutralized by a neutralizing agent different than an amine are added between steps a) and/or b) and/or c) or during step c ) or after step c) during or after the dispersion of the concentrate obtained.

2. A process for preparing an aqueous suspension of mineral matter according to claim 1, **characterized in that** the weight ratio of amine: carboxylic-vinyl polymer is between 0.05:1 and 0.35:1, preferably between 0.10:1 and 0.25:1.

3. A process for preparing an aqueous suspension of mineral matter according to claims 1 or 2, **characterized in that** the amine is selected from dimethylamine, monoethanolamine, diethanolamine, triethanolamine, N-methylethanolamine, 2-amino-2-methyl-1-propanol, triisopropanolamine, 2,3,4,6,7,8,9,10-octahydropyrimido [1,2-a] azepine (DBU, CAS No. 6674-22-2), the 2,2-diazabicyclo [2.2.2] octane (DABCO; CAS No. 280-57-9).

4. A process for preparing an aqueous suspension of mineral matter according to claims 1 or 2, **characterized in that** the amine has the formula (I):
NR₁R₂R₃ (I)
where R₁, R₂, R₃ are identical or different, chosen from:
- a linear or branched alkyl or oxyalkyl radical having 1 to 12 carbon atoms,
- a cycloalkyl radical having from 3 to 12 carbon atoms,
- a linear hydroxyl alkyl having 1 to 6 carbon atoms,
provided that:
- at the most one of R₂ or R₃ groups is hydrogen,
- at least one of R₁, R₂, R₃ groups contains an OH group,
- at least one of R₁, R₂, R₃ groups includes at least one branch in position α to the nitrogen atom.

5. A process for preparing an aqueous suspension of mineral matter according to claim 4, **characterized in that** in formula (I), R₁ is hydrogen, R₂ and R₃ are identical or different, chosen from:
- a linear or branched alkyl or oxyalkyl radical having 1 to 12 carbon atoms,
- a cycloalkyl radical having from 3 to 12 carbon atoms,
- a linear hydroxyl alkyl having 1 to 6 carbon atoms,
provided that:
- at the most one of R₂ or R₃ groups contains an OH group,
- at least one of R₁, R₂, R₃ groups includes at least one branch in position α to the nitrogen atom.

6. A process for preparing an aqueous suspension of mineral matter according to claim 4, **characterized in that** in formula (I), each alkyl or cycloalkyl or oxyalkyl radical comprises from 3 to 10, preferably from 3 to 8 carbon atoms.

7. A process for preparing an aqueous suspension of mineral matter according to claim 4, **characterized in that** in formula (I), one or more radicals carrying the OH group have 2 or 3, preferably 2 carbon atoms.

8. A process for preparing an aqueous suspension of mineral matter according to claim 4, **characterized in that** in formula (I), R₁ is hydrogen, R₂ and R₃ are identical or different, chosen from:
- a linear or branched alkyl or oxyalkyl radical having 3 to 8 carbon atoms,
- a cycloalkyl radical having from 6 to 10 carbon atoms,
- a linear hydroxyl alkyl having from 1 to 3, preferably 2 carbon atoms,
provided that:
- at least one of R₂ or R₃ groups contains an OH group,
- at least one of R₁, R₂, R₃ groups includes at least one branch in position α to the nitrogen atom.

9. A process for preparing an aqueous suspension of mineral matter according to one of claims 4 to 8, **characterized in that** the amine is selected from:
- N-(1-methylpropyl)-N-(2-hydroxyethylamine)
- N-(1,3-dimethylbutyl)-N-(2-hydroxyethylamine)
- N-(1-ethyl-3-methylpentyl)-N-(2-hydroxyethylamine)
- N-(3,3',5-trimethylcyclohexyl)-N-(2-hydroxyethylamine)
- N-(4-hydroxycyclohexyl)-N-(2-hydroxyethylamine).

10. A process for preparing an aqueous suspension of mineral matter according to one of claims 1 to 9, **characterized in that** the vinyl-carboxylic polymer is completely neutralized by at least one neutralizing agent selected from the calcium, magnesium hydroxides and/or oxides, or from sodium, potassium, lithium hydroxides and mixtures thereof.

11. A process for preparing an aqueous suspension of mineral matter according to one of claims 1 to 10, **characterized in that** said vinyl-carboxylic polymer is a homopolymer of acrylic acid or a copolymer of acrylic acid with another monomer.

12. A process for preparing an aqueous suspension of mineral matter according to one of claims 1 to 11, **characterized in that**, for the copolymer of acrylic acid with another monomer, this other monomer is selected from methacrylic acid, maleic anhydride, 2-acrylamido-2-methyl propane sulfonic acid, phosphoric esters of (meth) acrylates of alkylene glycol and non-ionic monomers of formula (II): 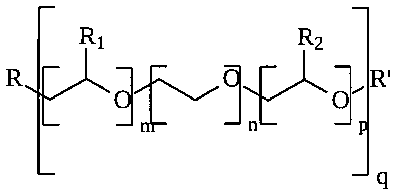 where m, n, p and q are integers and m, n, p are less than 150, q is greater than 0 and at least one integer m, n and p is not zero, R is a radical with a polymerizable unsaturated function, R₁ and R₂ are identical or different and represent hydrogen atoms or alkyl groups, R' represents hydrogen or a hydrocarbon radical having 1 to 40 carbon atoms, or an ionic group or ionizable.

13. A process for preparing an aqueous suspension of mineral matter according to one of claims 1 to 12, **characterized in that** said aqueous suspension after dispersion and/or grinding, has a solids content expressed as a percentage by dry weight of mineral matter relative to its total weight, between 10% and 82%, preferably between 50% and 81%, most preferably between 65% and 78%.

14. A process for preparing an aqueous suspension of mineral matter according to one of claims 1 to 13, **characterized in that** said aqueous suspension has a content by dry weight of vinyl-carboxylic polymer, compared to the total dry weight of mineral matter, between 0.01% and 5.00%, preferably between 0.01% and 2.00%, and most preferably between 0.05% and 1.00%.

15. A process for preparing an aqueous suspension of mineral matter according to one of claims 1 to 14, **characterized in that** the mineral matter is selected from natural calcium carbonate, synthetic or precipitated calcium carbonate, talc, kaolin, and mixtures thereof, preferably from natural, synthetic or precipitated calcium carbonate and mixtures thereof, and is preferably a natural calcium carbonate.

16. A process for preparing an aqueous suspension of mineral matter according to one of claims 1 to 15, **characterized in that** the natural calcium carbonate is selected from limestone, marble, calcite, chalk, dolomite and mixtures thereof.

17. Use of an aqueous suspension of mineral matter obtained in one of claims 1 to 16 in the field of paper, such as filler and paper coating, paints and plastics.
